# FASCICULE DE BREVET EUROPEEN

(11) **EP 1 989 345 B1**
(45) Date de publication et mention de la délivrance du brevet: **11.03.2015**
(21) Numéro de dépôt: 07731040.7
(22) Date de dépôt: 26.02.2007
(51) Int. Cl.: C08F 2/24, C09D 133/08, C25D 13/08

(54) **PROCEDE DE FORMATION DE FILMS ORGANIQUES SUR DES SURFACES CONDUCTRICES OU SEMI-CONDUCTRICES DE L'ELECTRICITE A PARTIR DE SOLUTIONS AQUEUSES**
VERFAHREN ZUR BILDUNG VON ORGANISCHEN SCHICHTEN AUF ELEKTRISCH LEITENDEN ODER HALBLEITENDEN OBERFLÄCHEN AUSGEHEND VON EINER WÄSSRIGEN LÖSUNG
METHOD OF FORMING ORGANIC FILMS ON ELECTRICALLY CONDUCTING OR SEMICONDUCTING SURFACES FROM AQUEOUS SOLUTIONS

(30) Priorité: 28.02.2006 FR 0601804; 28.02.2006 US 364360
(43) Date de publication de la demande: 12.11.2008
(73) Titulaire: Commissariat à l'Énergie Atomique et aux Énergies Alternatives, 75015 Paris (FR)
(72) Inventeur: DENIAU, Guy, F-78610 Auffargis (FR); PALACIN, Serge, F-78180 Montigny Le Bretonneux (FR)
(74) Mandataire: Noel, Chantal Odile
(86) Numéro de dépôt international: PCT/FR2007/000336
(87) Numéro de publication internationale: WO 2007/099218

(56) Documents cités:
- WO-A-01/59178
- WO-A-02/072282
- WO-A-03/018212

## Description

La présente Invention concerne le domaine des revêtements de surface, lesdits revêtements étant sous la forme de films organiques. Elle est plus particulièrement relative à un procédé de formation de films organiques copolymériques par greffage électrochimique sur des surfaces conductrices ou semiconductrices de l'électricité à partir de solutions aqueuses de précurseurs convenablement sélectionnés afin de permettre la formation simple et reproductible de ces films organiques, aux surfaces obtenues en mettant en oeuvre ce procédé et à leurs applications notamment pour la préparation de composants microélectroniques, de dispositifs biomédicaux ou de kits de criblage.

A l'heure actuelle, il existe plusieurs techniques permettant la réalisation de films organiques minces sur des substrats, chacune reposant sur une famille ou une classe de molécules adaptée.

Le procédé de formation d'un revêtement par centrifugation connu sous l'appellation anglaise de *"spin coating"* ou les techniques apparentées de formation de revêtements par immersion ("dip coating") ou de dépôt par vaporisation ("spray coating") ne requièrent pas d'affinité particulière entre les molécules déposées et le substrat d'intérêt. En effet, la cohésion du film déposé repose essentiellement sur les interactions entre les constituants du film qui peut par exemple être réticulé après dépôt pour en améliorer la stabilité. Ces techniques sont très versatiles, applicables à tous types de surfaces à couvrir, et très reproductibles. Cependant, elles ne permettent aucun greffage effectif entre le film et le substrat (il s'agit d'une simple physisorption), et les épaisseurs produites sont mal contrôlables notamment pour les dépôts les plus fins (inférieurs à 20 nanomètres). De plus, les techniques de « spin coating » ne permettent des dépôts uniformes que lorsque la surface à recouvrir est essentiellement plane. La qualité des films obtenus par les techniques de "spray coating" est liée au mouillage des surfaces par le liquide pulvérisé, puisque le dépôt ne devient essentiellement filmogène que lorsque les gouttes coalescent. Ainsi, pour un polymère donné, il n'existe généralement qu'un ou deux solvants organiques capables de donner des résultats satisfaisants en termes de contrôle de l'épaisseur et de l'homogénéité du dépôt.

D'autres techniques de formation d'un revêtement organique à la surface d'un support, telles que le dépôt par plasma décrit par exemple dans les articles de Konuma M., "Film deposition by plasma technique", (1992) Springer Verlag, Berlin, et de Biederman H. et Osada Y., "Plasma polymerization processes", 1992, Elsevier, Amsterdam, ou bien l'activation photochimique reposent sur un même principe : générer à proximité de la surface à couvrir des formes instables d'un précurseur, qui évoluent en formant un film sur le substrat. Si le dépôt par plasma ne requiert aucune propriété particulière de ces précurseurs, la photo-activation nécessite quant à elle l'utilisation de précurseurs photosensibles, dont la structure évolue sous l'influence d'une irradiation lumineuse. Ces techniques donnent en général lieu à la formation de films adhérents, bien qu'il soit le plus souvent impossible de discerner si cette adhésion est due à une réticulation d'un film topologiquement fermé autour de l'objet ou à une réelle formation de liaisons à l'interface.

L'auto-assemblage de monocouches est une technique très simple à mettre en oeuvre (Ulman A., "An introduction to ultrathin organic films from Langmuir-Blodgett films to self-assembly", 1991, Boston, Academie Press). Cette technique requiert toutefois l'utilisation de précurseurs généralement moléculaires possédant une affinité suffisante pour la surface d'intérêt à revêtir. On parlera alors de couple précurseur-surface, tels les composés soufrés ayant une affinité pour l'or ou l'argent, les tri-halogéno silanes pour les oxydes comme la silice ou l'alumine, les polyaromatiques pour le graphite ou les nanotubes de carbone. Dans tous les cas, la formation du film repose sur une réaction chimique spécifique entre une partie du précurseur moléculaire (l'atome de soufre dans le cas des thiols par exemple) et certains sites "récepteurs" de la surface. Une réaction de chimisorption assure l'accrochage. On obtient ainsi, à température ambiante et en solution des films d'épaisseur moléculaire (moins de 10 nm). Cependant, si les couples impliquant des surfaces d'oxyde donnent lieu à la formation de films très solidement greffés (la liaison Si-O impliquée dans la chimisorption de tri-halogéno silanes sur silice est parmi les plus stables de la chimie), il n'en est rien lorsque l'on s'intéresse aux métaux ou aux semi-conducteurs sans oxyde. Dans ces cas, la liaison d'interface entre la surface conductrice et le film monomoléculaire est fragile. Ainsi, les monocouches auto-assemblées de thiols sur or désorbent dès qu'on les chauffe au-dessus de 60°C, ou en présence d'un bon solvant à température ambiante, ou encore dès qu'elles sont mises en contact avec un milieu liquide oxydant ou réducteur. De façon semblable, les liaisons Si-O-Si sont fragilisées dès qu'elles se trouvent en milieu aqueux voire humide, en particulier sous l'effet de la chaleur.

L'électrogreffage de polymères est une technique basée sur l'initiation puis la polymérisation, par propagation en chaîne électro-induite, de monomères électro-actifs sur la surface d'intérêt jouant à la fois le rôle d'électrode et celui d'amorceur de polymérisation (S. Palacin et al., "Molecule-to-metal bonds : electrografting polymers on conducting surfaces.", ChemPhysChem, 2004, 10, 1468). L'électrogreffage requiert l'utilisation de précurseurs adaptés à son mécanisme d'initiation par réduction et de propagation, en général anionique, car on préfère souvent l'électrogreffage initié cathodiquement, applicable sur les métaux nobles et non nobles (contrairement à l'électrogreffage par polarisation anodique qui n'est applicable que sur des substrats nobles). Les molécules "vinyliques appauvries", c'est-à-dire porteuses de groupements fonctionnels électro-attracteurs, comme les acrylonitriles, les acrylates, les vinyl-pyridines, et... sont particulièrement adaptées à ce procédé qui donne lieu à de nombreuses applications dans le domaine de la microélectronique ou du biomédical. L'adhérence des films électrogreffés est assurée par une liaison covalente de type carbone-métal (G. Deniau et al., "Carbon-to-metal bounds: electrochemical reduction of 2-butenenitrile", Surface Science, 2006, 600, 675-684).

Selon cette technique d'électrogreffage, la polymérisation est indispensable à la formation de la liaison d'interface carbone/métal : il a été en effet montré (G. Deniau et al., "Coupled chemistry revisited in the tentative cathodic electropolymerization of 2-butenenitrile.", Journal of Electroanalytical Chemistry, 1998, 451, 145-161) que le mécanisme de l'électrogreffage procède par une électroréduction du monomère sur la surface, pour donner un radical anion instable, qui, s'il n'était pas au milieu de molécules polymérisables, désorberait pour retourner en solution (*op. cit.*). A côté de cette réaction de désorption, la réaction d'addition (de type addition de Michaël) de la charge du premier radical anion chimisorbé sur un monomère libre offre un second moyen de stabiliser l'intermédiaire réactionnel : le produit de cette addition donne à nouveau un radical anion, où la charge s'est cependant "éloignée" de la surface, ce qui contribue à stabiliser l'édifice adsorbé. Ce radical anion dimérique peut lui-même à nouveau s'additionner à un monomère libre, et ainsi de suite : chaque nouvelle addition est une stabilité supplémentaire par relaxation de la répulsion charge/surface polarisée, ce qui revient à dire que la liaison d'interface du premier radical anion, temporaire, devient stable à mesure que la polymérisation a lieu. En d'autres termes, il a été avancé qu'un monomère vinylique qui ne peut pas polymériser ne peut pas s'électro-greffer.

Parmi les différentes techniques rappelées précédemment, l'électrogreffage est la seule technique qui permette de produire des films greffés avec un contrôle spécifique de la liaison d'interface. De plus, contrairement aux techniques plasma ou photoinduites, l'électrogreffage ne génère ses espèces réactives qu'au voisinage immédiat de la surface d'intérêt (dans la double couche électrochimique, dont l'épaisseur est dans la plupart des cas de quelques nanomètres).

Il semble admis aujourd'hui que l'obtention de films polymères greffés par électrogreffage de monomères vinyliques activés sur des surfaces conductrices de l'électricité procède grâce à une électro-initiation de la réaction de polymérisation à partir de la surface, suivie d'une croissance des chaînes, monomère par monomère. Le mécanisme réactionnel de l'électrogreffage a notamment été décrit dans les articles de C. Bureau et al., Macromolecules, 1997, 30, 333 ; C. Bureau et J. Delhalle, Journal of Surface Analysis, 1999, 6(2), 159 et C. Bureau et al., Journal of Adhésion, 1996, 58, 101.

A titre d'exemple, le mécanisme réactionnel de l'électrogreffage de l'acrylonitrile par polarisation cathodique peut être représenté par le schéma A ci après :

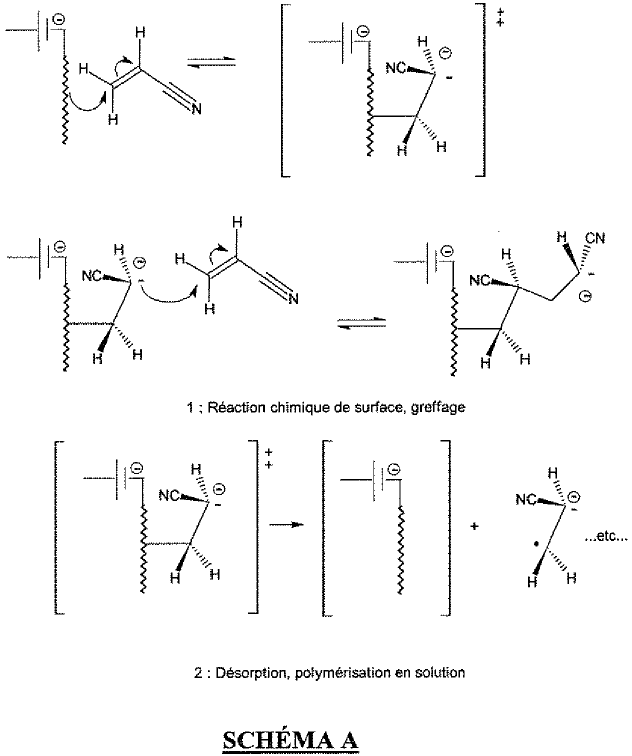

Sur ce schéma, la réaction de greffage correspond à l'étape 1, où la croissance a lieu à partir de la surface. L'étape 2 est la réaction parasite principale, qui conduit à l'obtention d'un polymère non greffé ; cette réaction est limitée par l'emploi de fortes concentrations en monomère.

La croissance des chaînes greffées s'effectue donc par polymérisation purement chimique, c'est-à-dire indépendamment de la polarisation de la surface conductrice qui a donné lieu au greffage. Cette étape est donc sensible à (et est en particulier interrompue par) la présence d'inhibiteurs chimiques de cette croissance, en particulier par les protons.

Sur le schéma A ci-dessus, où l'on a considéré l'électrogreffage de l'acrylonitrile sous polarisation cathodique, la croissance des chaînes greffées s'effectue par polymérisation anionique. Cette croissance est interrompue notamment par des protons, et il a même été démontré que la teneur en protons constitue le paramètre majeur qui pilote la formation de polymère en solution ; les informations obtenues en cours de synthèse, notamment l'allure des voltamogrammes qui accompagnent la synthèse, le montrent (voir en particulier l'article de C. Bureau, Journal of Electroanalytical Chemistry, 1999, 479, 43). Les traces d'eau, et plus généralement les protons labiles des solvants protiques, constituent des sources de protons préjudiciables à la croissance des chaînes greffées.

Globalement, si l'on sait donc réaliser des liaisons chimiques sur des substrats conducteurs ou semi-conducteurs de l'électricité par électrogreffage de différents précurseurs à partir de solutions organiques, il reste difficile d'obtenir, grâce à ces réactions, de tels films à partir de solutions aqueuses car les mécanismes réactionnels sous-jacents (polymérisation de type anionique) ne permettent pas de travailler dans l'eau. Jusqu'à présent, seuls les sels d'aryldiazonium ont permis une approche de solution à ce problème.

Ainsi, comme décrit par exemple dans la demande de brevet français FR-A-2 804 973, l'électrogreffage de précurseurs tels que les sels d'aryldiazonium qui portent une charge positive, peut être réalisé grâce à une réaction de clivage après réduction du cation, pour donner un radical qui se chimisorbe sur la surface. Tout comme pour l'électrogreffage des polymères, la réaction d'électrogreffage des sels d'aryldiazonium est électro-initiée et conduit à la formation de liaisons chimiques d'interface. A l'inverse des réactions d'électrogreffage de polymères vinyliques, l'électrogreffage des sels d'aryldiazonium n'a pas "besoin" d'une réaction chimique couplée pour stabiliser l'espèce chimisorbée formée suite au transfert de charge, car cette espèce est neutre électriquement, et non chargée négativement comme dans le cas d'un monomère vinylique. Elle conduit donc - *a priori -* à un adduit surface/groupement aryle stable.

Toutefois, il a été démontré, notamment dans la demande de brevet français FR-A-2 829 046, que les sels d'aryldiazonium conduisent à des films organiques très minces qui peuvent croître sur eux-mêmes : une fois le greffage sur la surface initiale réalisé par réaction d'électro-clivage et chimisorption, le film croît par réaction électro-suivie, à la manière d'un film de polymère conducteur, mais à la cathode. Il en résulte une difficulté à effectuer un contrôle des épaisseurs des films organiques résultant de l'électrogreffage des sels d'aryldiazonium. En revanche, l'association en solution aqueuse d'un sel de diazonium et d'un monomère vinylique peut conduire à la formation d'un film greffé à la condition que le monomère vinylique soit soluble dans l'eau. Cependant, cette méthode d'obtention de films greffés est limitée aux rares monomères vinyliques solubles dans l'eau comme certains acides acryliques, vinyliques hydroxylés ou aminés et conduit généralement à des films de mauvaise qualité (voir l'article de Bell et Zhang, Journal of Applied Polymer Science, 1999, 73, 2265-272).

Les réactions d'électrogreffage actuellement disponibles selon l'art antérieur permettent donc d'obtenir facilement une certaine variété de films organiques sur différents substrats conducteurs et semi-conducteurs à partir de solutions organiques. Néanmoins, il reste à élargir cette gamme afin de répondre à la demande de l'industrie, de diversifier les propriétés d'usage de tels matériaux et donc leurs potentialités d'applications. Par ailleurs, les protocoles utilisés dans l'industrie mettent en oeuvre des solvants organiques qui sont notoirement toxiques et coûteux. Il est donc également souhaitable de proposer de nouveaux procédés moins polluants et plus rentables pour les industriels.

A l'heure actuelle, il n'existe pas de procédé permettant la réalisation de films organiques greffés, de bonne qualité, sur des surfaces conductrices ou semiconductrices de l'électricité, qui puisse facilement être mis en oeuvre en milieu protique, notamment en milieu aqueux, à partir d'une grande variété de monomères polymérisables.

C'est afin de résoudre ce problème technique que les Inventeurs ont mis au point ce qui fait l'objet de l'Invention.

Les Inventeurs ont découvert, de manière surprenante et inattendue, qu'il était possible de réaliser des films organiques copolymériques sur une surface conductrice ou semi-conductrice de l'électricité dans un milieu protique, et particulièrement en milieu aqueux, à partir d'une grande variété de monomères et notamment de monomères vinyliques, de préférence hydrophobes.

Les Inventeurs ont en effet mis au point un procédé de préparation d'un film organique copolymérique sur une surface conductrice ou semi-conductrice de l'électricité, par électrolyse d'une solution électrolytique comprenant les espèces suivantes : un solvant protique, un amorceur soluble dans le milieu, un monomère polymérisable par voie radicalaire, ledit procédé étant caractérisé en ce que le monomère polymérisable est solubilisé sous forme micellaire.

L'invention a donc pour premier objet un procédé de formation d'un film organique copolymérique sur une surface conductrice ou semi-conductrice de l'électricité, par électrolyse d'une solution électrolytique jusqu'à obtention dudit film organique copolymérique greffé sur ladite surface, ledit procédé étant caractérisé en ce que :
a) la solution électrolytique renferme :
   i) au moins un solvant protique,
   ii) au moins un amorceur de polymérisation par voie radicalaire, ledit amorceur étant soluble dans ledit solvant protique,
   iii) au moins un monomère polymérisable par voie radicalaire,
   iv) au moins un tensioactif,
b) l'électrolyse de la solution électrolytique est réalisée à un potentiel de réduction au moins égal au potentiel de réduction dudit amorceur.

Au sens de la présente Invention, on entend par film organique "copolymérique", tout film polymérique issu de plusieurs unités monomériques d'espèces chimiques différentes, et notamment tout film préparé à partir d'au moins un type de monomère polymérisable, particulièrement par voie radicalaire, et d'au moins un type d'amorceur, également polymérisable, soluble dans le solvant protique.

Au sens de la présente Invention, on entend par "amorceur" toute molécule organique susceptible de se chimisorber sur une surface conductrice ou semi-conductrice de l'électricité par réaction électrochimique, et, comportant une fonction réactive vis-à-vis d'un radical carbone après chimisorption. Ainsi par exemple l'amorceur peut être choisi parmi les systèmes conjugués, les halogénoalcanes et les sels d'aryle diazonium ; le monomère polymérisable par voie radicalaire peut être choisi parmi les monomères vinyliques.

De manière non exhaustive, les surfaces conductrices ou semiconductrices de l'électricité sont choisies parmi l'inox, l'acier, le fer, le cuivre, le nickel, le cobalt, le niobium, l'aluminium, l'argent, le titane, le silicium avec ou sans son oxyde, le nitrure de titane, le tungstène, le nitrure de tungstène, le tantale, le nitrure de tantale et les surfaces métalliques nobles composées par au moins un métal choisi parmi l'or, le platine, l'iridium et le platine iridié. Selon un mode de réalisation préféré de l'Invention, la surface employée est une surface d'acier, en particulier d'acier inoxydable tel que par exemple l'acier inoxydable de type 316, de préférence 316L.

Au sens de la présente Invention, un amorceur est considéré comme soluble dans un solvant protique considéré s'il demeure soluble jusqu'à une concentration de 0,5 M, *i.e.* que sa solubilité doit être au moins égale à 0,5 M, dans les conditions normales de température et de pression. La solubilité est définie comme la composition analytique d'une solution saturée en fonction de la proportion d'un soluté donné dans un solvant donné ; elle peut notamment s'exprimer en molarité. Une solution contenant une concentration donnée de composé sera considérée comme saturée lorsque la concentration sera égale à la solubilité du composé dans ce solvant. Ainsi la solubilité peut être finie comme elle peut être infinie, dans ce dernier cas le composé est soluble en toute proportion dans le solvant considéré.

Le solvant protique est avantageusement choisi dans le groupe constitué par l'eau, l'acide acétique, les solvants hydroxylés comme le méthanol et l'éthanol, les glycols liquides de faible poids moléculaires tels que l'éthylèneglycol, et leurs mélanges. Selon une forme de réalisation particulière de l'Invention, le solvant protique peut être utilisé en mélange avec un solvant aprotique étant entendu que le mélange résultant présente les caractéristiques d'un solvant protique. L'eau est le solvant protique préféré, il est particulièrement intéressant que l'eau soit distillée ou désionisée.

Les amorceurs de polymérisation par voie radicalaire préférés selon l'Invention sont les sels d'aryle diazonium.

Parmi les sels d'aryle diazonium, on peut en particulier citer les composés de formule (I) suivante :

R-N₂⁺, A⁻ (I)

dans laquelle :
- A représente un anion monovalent et
- R représente un groupe aryle.

A titre de groupe aryle des composés de formule (I) ci-dessus, on peut notamment citer les structures carbonées aromatiques ou hétéroaromatiques, éventuellement mono- ou polysubstituées, constituées d'un ou plusieurs cycles aromatiques ou hétéroaromatiques comportant chacun de 3 à 8 atomes, le ou les hétéroatomes pouvant être N, O, P ou S. Le ou les substituants peuvent contenir un ou plusieurs hétéroatomes, tels que N, O, F, Cl, P, Si, Br ou S ainsi que des groupes alkyles.

Au sein des composés de formule (I) ci-dessus, A peut notamment être choisi parmi les anions inorganiques tels que les halogénures comme I⁻, Br⁻ et Cl⁻, les halogénoboranes tels que le tetrafluoroborane, et les anions organiques tels que les alcoolates, les carboxylates, les perchlorates et les sulfates.

Selon la présente Invention, le groupement aryle des sels d'aryle diazonium et en particulier le groupement R des composés de formule (I) ci-dessus, sont de préférence choisis parmi les groupes aryles substitués par des groupements attracteurs d'électrons tels que NO₂, COH, les cétones, CN, CO₂H, NH₂, les esters et les halogènes. Les groupements aryle particulièrement préférés sont les groupements nitrophényle et phényle.

Selon une forme de réalisation particulièrement avantageuse de l'Invention, l'amorceur de polymérisation par voie radicalaire est choisi parmi le tétrafluoroborate de phényldiazonium, le tétrafluoroborate de 4-nitrophényldiazonium, le tétrafluoroborate de 4-bromophényldiazonium, le chlorure de 2-méthyl-4-chlorophényldiazonium, le tétrafluoroborate de 4-benzoylbenzènediazonium, le tétrafluoroborate de 4-cyanophényldiazonium, le tétrafluoroborate du 4-carboxyphényldiazonium, le tétrafluoroborate de 4-acétamidophényldiazonium, le tétrafluoroborate de l'acide 4-phénylacétique diazonium, le sulfate de 2-méthyl-4-[(2-méthylphényl)diazényl]benzènediazonium, le chlorure de 9,10-dioxo-9,10-dihydro-1-anthracènediazonium, le tétrafluoroborate de 4-nitronaphtalènediazonium, et le tétrafluoroborate de naphtalènediazonium.

La quantité d'amorceur de polymérisation par voie radicalaire présente dans la solution électrolytique utilisée conformément au procédé selon l'Invention peut varier en fonction du souhait de l'expérimentateur. Cette quantité est notamment liée à l'épaisseur de film organique copolymérique désiré ainsi qu'à la quantité d'amorceur qu'il est souhaitable d'intégrer au film. Ainsi pour obtenir un film greffé sur l'ensemble de la surface utilisée, il faut employer une quantité minimale d'amorceur qu'il est possible d'estimer par des calculs d'encombrement moléculaire. Selon une forme de réalisation particulièrement avantageuse de l'Invention, la concentration en amorceur de polymérisation par voie radicalaire au sein de la solution électrolytique est comprise entre 10⁻⁴ et 0,5 M environ.

Les monomères polymérisables par voie radicalaire correspondent aux monomères susceptibles de polymériser en condition radicalaire après initiation par un amorceur. Parmi ces monomères, les monomères vinyliques sont particulièrement concernés, notamment les monomères décrits dans la demande de brevet français n° FR 05 02516 ainsi que dans la demande de brevet français FR-A-2 860 523, délivrée sous le n° FR 03 11491. Les monomères particulièrement concernés sont ceux qui, *a contrario* des composés solubles en toute proportion dans le solvant considéré, sont solubles jusqu'à une certaine proportion dans le solvant, *i*.*e*. la valeur de leur solubilité dans ce solvant est finie. Selon une forme de réalisation préférée de l'invention, les monomères polymérisables par voie radicalaire sont donc choisis parmi les monomères dont la solubilité dans le solvant protique est finie.

Selon une forme de réalisation particulièrement avantageuse de l'Invention, le ou les monomères vinyliques sont choisis parmi les monomères de formule (II) suivante : 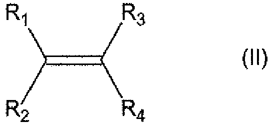 dans laquelle les groupes R₁ à R₄, identiques ou différents, représentent un atome monovalent non métallique tel qu'un atome d'halogène ou un atome d'hydrogène, ou un groupe chimique saturé ou insaturé, tel qu'un groupe alkyle, aryle, un groupe -COOR₅ dans lequel R₅ représente un atome d'hydrogène ou un groupe alkyle en C₁-C₆, nitrile, carbonyle, amine ou amide.

Parmi les composés de formule (II) ci-dessus, on peut en particulier citer l'acrylonitrile, le méthacrylonitrile, le méthacrylate de méthyle, le méthacrylate d'éthyle, le méthacrylate de butyle, le méthacrylate de propyle, le méthacrylate d'hydroxyéthyle, le méthacrylate d'hydroxypropyle, le méthacrylate de glycidyle ; le crotononitrile, le pentènenitrile, le crotonate d'éthyle et leurs dérivés ; les acrylamides et notamment les méthacrylamides d'amino-éthyle, propyle, butyle, pentyle et hexyle, les cyanoacrylates, les di-acrylates et di-méthacrylates, les tri-acrylates et tri-méthacrylates, les tétra-acrylates et tétra-méthacrylates (tels que le pentaérythritol tetraméthacrylate), le styrène et ses dérivés, le parachloro-styrène, le pentafluorostyrène, la N-vinyl pyrrolidone, la 4-vinyl pyridine, la 2-vinyl pyridine, les halogénures de vinyle, d'acryloyle ou de méthacryloyle, le di-vinylbenzène (DVB), et plus généralement les agents réticulants vinylique ou à base d'acrylate, de méthacrylate, et de leurs dérivés.

Parmi les dérivés du crotononitrile, du pentènenitrile et du crotonate d'éthyle, on peut envisager d'autres composés tels que des esters, les acides correspondants ou les acides aminés liés par leur fonction amine, aisément accessibles par de simples réactions chimiques connues de l'homme du métier.

Les monomères préférés selon l'Invention sont ceux dont la solubilité dans le solvant protique de réaction est faible. Ainsi, les monomères polymérisables utilisables conformément au procédé de l'Invention sont de préférence choisis parmi les composés dont la solubilité dans le solvant protique est inférieure à 0,1 M, plus préférentiellement entre 10⁻² et 10⁻⁶ M. Parmi de tels monomères, on peut par exemple citer le butylméthacrylate dont la solubilité, mesurée dans les conditions normales de température et de pression, est d'environ 4.10⁻² M. Selon l'Invention, et sauf indication contraire, les conditions normales de pression et de température (CNPT) correspondent à une température de 25°C et à une pression de 1.10⁵ Pa.

La quantité de monomère polymérisable présents dans la solution électrolytique peut varier en fonction du souhait de l'expérimentateur. Cette quantité peut être supérieure à la solubilité du monomère considéré dans le solvant protique employé et peut représenter par exemple de 18 à 40 fois la solubilité dudit monomère à une température donnée. Selon une forme de réalisation avantageuse, la concentration en monomères polymérisables par voie radicalaire au sein de la solution électrolytique est comprise entre environ 0,1 M et 5 M.

Les tensioactifs sont des molécules comportant une partie lipophile (apolaire) et une partie hydrophile (polaire). Parmi les tensioactifs utilisables selon l'Invention, on peut notamment citer :
i) les tensioactifs anioniques dont la partie hydrophile est chargée négativement ; ils sont de préférence choisis parmi les composés de formule (III) suivante :

   R₆-A⁻, Cat⁺ (III)

   dans laquelle :
   - R₆ représente un groupe aryle ou alkyle en C₁-C₂₀, de préférence en C₁-C₁₄, et plus préférentiellement en C₅-C₁₄,
   - A⁻ est un anion choisi parmi les sulfonates, les sulfates, les phosphates, les carboxylates, les sulfosuccinates, etc....,
   - Cat ⁺ est un contre ion cationique, de préférence choisi parmi l'ion ammonium (NH₄⁺), les ammoniums quaternaires tels que tetrabutylammonium, et les cations alcalins tels que Na⁺, Li⁺ et K⁺ ;
ii) les tensioactifs cationiques dont la partie hydrophile est chargée positivement ; ils sont de préférence choisis parmi les ammoniums quaternaires de formule (IV) suivante :

   (R₇)₄-N⁺, An⁻ (IV)

   dans laquelle :
   - les groupes R₇, identiques ou différents, représentent une chaîne aliphatique, par exemple une chaîne alkyle en C₁-C₂₀, de préférence en C₁-C₁₄, et plus préférentiellement en C₅-C₁₄,
   - An⁻ est un contre ion anionique choisi notamment parmi les dérivés du bore tels que le tetrafluoroborate ou les ions halogénures tels que F⁻, Br⁻, I⁻ ou Cl⁻ ;
iii) les tensioactifs zwittérioniques qui sont des composés neutres possédant des charges électriques formelles d'une unité et de signe opposé ; ils sont de préférence choisis parmi les composés de formule (V) suivante :

   Z⁻-R₈-Z⁺ (V)

   dans laquelle :
   - R₈ représente une chaîne alkyle en C₁-C₂₀, de préférence en C₁-C₁₄, et plus préférentiellement en C₅-C₁₄,
   - Z⁻ représente une fonction chargée négativement portée par R₈, de préférence choisie parmi sulfate et carboxylate,
   - Z⁺ représente une fonction chargée positivement, de préférence un ammonium ;
iv) les tensioactifs amphotères qui sont des composés se comportant à la fois comme un acide ou comme une base selon le milieu dans lequel ils sont placés ; ces composés peuvent avoir une nature zwittérionique, les acides aminés sont un exemple particulier de cette famille,
v) les tensioactifs neutres (non-ioniques): les propriétés tensioactives, notamment l'hydrophilie, sont apportées par des groupements fonctionnels non chargés tels qu'un alcool, un éther, un ester ou encore une amide, contenant des hétéroatomes tels que l'azote ou l'axygène ; en raison de la faible contribution hydrophile de ces fonctions, les composés tensioactifs non ioniques sont le plus souvent polyfonctionnels.

Les tensioactifs chargés peuvent bien entendu porter plusieurs charges.

Parmi les différentes significations du groupement aryle du groupe R₆ des composés de formule (III) ci-dessus, on peut notamment citer le cycle phényle, substitué ou non, et parmi les différentes significations du groupement alkyle R₆, les chaînes alkyle en C₁-C₂₀, de préférence en C₁-C₁₄.

A titre de composé de formule (III), on préfère utiliser le paratoluènesulfonate de tetraéthylammonium, le dodécylsulfate de sodium, le palmitate de sodium, le stéarate de sodium, le myristate de sodium, le di(2-éthylhexyl) sulfosuccinate de sodium, le méthylbenzène sulfonate et l'éthylbenzène sulfonate.

Parmi les différentes significations des groupes R₇ des ammoniums quaternaires de formule (IV) ci-dessus, on peut notamment citer les groupes méthyle, éthyle, propyle, butyle et tetradécyle.

Parmi les ammoniums quaternaires de formule (IV) ci-dessus, on préfère utiliser le bromure de tetradécyltriméthyle ammonium (TTAB), les halogénures d'alkylpyridinium portant une chaîne aliphatique en C₁-C₁₈ et les halogénures d'alkylammonium.

A titre de tensioactif zwittérionique, on peut notamment citer le N,N-diméthyldodécylammoniumbutanate de sodium, le diméthyldodécylammonium propanate de sodium et les acides aminés.

A titre de tensioactif amphotère, on peut notamment citer le lauroamphodiacétate de disodium, les bétaïnes comme l'alkylamidopropylbétaïne ou la laurylhydroxysulfobétaïne.

A titre de tensioactif non-ionique, on peut en particulier citer les polyéthers comme les tensioactifs polyéthoxylés tels que par exemple le lauryléther de polyéthylèneglycol (POE23 ou Brij ® 35), les polyols (tensioactifs dérivés de sucres) en particulier les alkylates de glucose tels que par exemple l'hexanate de glucose.

Les tensioactifs utilisables selon l'invention sont également des émulsifiants, *i.e.,* lorsqu'il sont présents en faibles quantités, ils facilitent la formation d'une émulsion ou augmentent la stabilité colloïdale en faisant diminuer la vitesse d'agrégation ou la vitesse de coalescence ou les deux. Des mesures de l'une ou l'autre des vitesses selon les techniques connues par l'homme du métier comme la mesure de la taille des gouttes par diffusion de la lumière pourront permettre de déterminer le meilleur émulsifiant parmi les tensioactifs recommandés dans chacun des cas.

Parmi les tensioactifs préférés selon l'invention on peut citer les tensioactifs anioniques tels que les sulfonates, les ammoniums quaternaires et les tensioactifs non ioniques tels que les polyoxyéthylènes.

La quantité de tensioactifs éventuellement présente dans la solution électrolytique est variable, elle doit notamment être suffisante pour permettre la formation du film organique copolymérique, la quantité minimum de tensioactif peut être facilement déterminée en échantillonnant des solutions électrolytiques de composition identique mais de concentration variable en tensioactif. De manière générale la concentration en tensioactif est telle que la concentration micellaire critique (CMC) soit atteinte et qu'il puisse y avoir ainsi formation de micelles. La CMC d'un tensioactif peut être déterminée par les méthodes connues de l'homme du métier, par exemple par des mesures de tensions de surface.

La concentration en tensioactif au sein de la solution électrolytique est typiquement au moins égale à la CMC et généralement comprise entre 0,5 mM et 5 M environ, de préférence entre 0,1 mM et 150 mM environ. Selon une forme de réalisation avantageuse de l'Invention, la concentration en tensioactif est usuellement de 10 mM.

L'intérêt du tensioactif réside dans sa capacité à former des micelles dans le solvant qui favorisent la croissance de macroradicaux, en les isolant du milieu extérieur, assurant ensuite la croissance du film.

Avantageusement le pH de la solution électrolytique est inférieur à 7, typiquement inférieur ou égal à 2. Il est recommandé de travailler à un pH compris entre 1,6 et 2,2 lorsque l'amorceur est un sel d'aryle diazonium. Si nécessaire, le pH de la solution électrolytique peut être ajusté à la valeur désirée à l'aide d'un ou plusieurs agents acidifiants bien connus de l'homme du métier, par exemple à l'aide d'acides minéraux ou organiques tels que l'acide chlorhydrique, l'acide sulfurique, etc....

La présence de protons dans le milieu facilite notamment la formation de radicaux hydrogène.

L'électrolyse de la solution électrolytique est de préférence réalisée sous agitation, par exemple sous agitation mécanique et typiquement à l'aide d'un barreau aimanté, ou dans certains cas par barbotage.

Il est par ailleurs préférable que le procédé comporte une étape supplémentaire, préalablement à l'étape d'électrolyse, de nettoyage de la surface sur laquelle on souhaite former le film organique copolymérique, notamment par ponçage et/ou polissage ; un traitement supplémentaire sous ultrasons avec un solvant organique comme l'éthanol est même recommandé. Il est également profitable que le solvant protique soit dégazé avant la mise en oeuvre du procédé ou purgé à l'aide d'un gaz inerte comme l'argon.

Le potentiel appliqué à la solution électrolytique doit correspondre au moins à celui de l'amorceur afin de permettre l'électrolyse qui correspond à l'initiation de la polymérisation. Il peut être supérieur à celui du solvant protique ; ainsi si le solvant protique contient un nombre élevé de protons il y aura formation de radicaux hydrogène dans le milieu qui faciliteront la formation du film par activation des micelles formées.

Selon un premier mode de réalisation avantageux de l'invention, la solution électrolytique renferme au moins un tensioactif, présente un pH acide, et le potentiel appliqué est suffisant pour engendrer la formation de radicaux hydrogène (soit au moins plus cathodique que - 0,8 V). Dans ce cas il n'est pas nécessaire que la solution électrolytique contienne une proportion importante d'amorceur, la quantité suffisante théorique correspond à celle nécessaire à la formation d'un film organique, dit "film de primaire", obtenu par greffage de l'amorceur sur l'ensemble de la surface. Un balayage du potentiel entraînera, dans le cas où l'amorceur est un sel de diazonium, la réduction du diazonium avec formation d'une sous-couche polynitrophénylène puis réduction des H⁺ avec formation massive de radicaux hydrogène qui amorcent la polymérisation radicalaire dans les micelles. Il est recommandé que le courant appliqué soit de l'ordre du mA.cm⁻², la densité de courant de travail étant de préférence inférieure ou égale à 10⁻⁴ A.cm⁻² environ. Une valeur optimale peut-être estimée à partir du nombre moyen de sites de greffage sur la surface considérée.

Selon un autre mode de réalisation avantageux de l'Invention, la concentration en amorceur est sensiblement augmentée, par exemple elle est de 10⁻² M, de telle sorte qu'il puisse servir à la fois d'amorceur au sein des micelles et de primaire d'adhésion sur la surface. Dans ce cas, il est préférable que le potentiel de travail employé soit au maximum supérieur de 5 % à la valeur du potentiel de réduction de l'amorceur considéré présent au sein de la solution électrolytique et pas plus cathodique que - 0,8V. En effet pour favoriser la réaction de surface, il est avantageux de se placer à une valeur proche du seuil de réduction du composé qui réagira en surface.

L'électrolyse de la solution électrolytique peut-être indépendamment réalisée par polarisation en conditions de voltampérométrie linéaire ou cyclique, en conditions potentiostatiques, potentiodynamiques, intensiostatiques, galvano statiques, galvanodynamiques ou par chronoampérométrie simple ou pulsée. Avantageusement elle est réalisée par polarisation en conditions de voltampérométrie cyclique. Dans ce cas le nombre de cycles sera compris de manière préférentielle entre 1 et 100 encore plus préférentiellement entre 1 et 10.

L'épaisseur du film organique copolymérique formé sur la surface conductrice ou semi-conductrice de l'électricité est contrôlée par la simple variation des paramètres expérimentaux, accessibles, de manière empirique à l'homme du métier selon le monomère polymérisable et l'amorceur qu'il emploie. Ainsi de manière non exhaustive l'épaisseur du film peut-être contrôlée par le nombre de balayages dans le cas d'une voltampérométrie cyclique. Elle peut également être contrôlée par la concentration initiale en espèces électroactives, la valeur du potentiel maximum imposé et le temps de polarisation, ce dernier pouvant varier soit directement, c'est le temps d'une électrolyse, soit par le biais d'une vitesse de balayage en voltampérométrie.

Le procédé conforme à l'Invention peut ainsi notamment être réalisé dans une cellule d'électrolyse comportant trois électrodes : une première électrode de travail constituant la surface destinée à recevoir le film, une contre électrode ainsi qu'une électrode de référence.

La présente Invention a également pour objet les surfaces conductrices ou semiconductrices de l'électricité obtenues en mettant en oeuvre le procédé tel que décrit ci-dessus, lesdites surfaces étant caractérisées par le fait qu'elles comportent au moins une face, entièrement ou partiellement, recouverte par un film organique copolymérique greffé d'au moins un monomère polymérisable par voie radicalaire et d'au moins un amorceur par voie radicalaire, ledit amorceur étant soluble dans la solution électrolytique mise en oeuvre au cours dudit procédé.

Les films organiques copolymériques obtenus selon l'Invention ont avantageusement une épaisseur comprise entre 5 et 1000 nm inclusivement et encore plus préférentiellement entre 10 et 200 nm inclusivement.

Les surfaces obtenues conformément à l'Invention peuvent être utilisées dans tout type d'industrie et notamment dans les industries de l'électronique et de la microélectronique (par exemple pour la préparation de composants micro électroniques), pour la préparation de dispositifs biomédicaux tels que par exemple des dispositifs implantables dans l'organisme (stents par exemple), des kits de criblages, etc.

Les solutions électrolytiques utilisées conformément à l'Invention sont nouvelles en soi et constituent, à ce titre un autre objet de l'Invention.

La présente Invention a donc également pour objet une solution électrolytique, caractérisée par le fait qu'elle renferme :
i) au moins un solvant protique,
ii) au moins un amorceur de polymérisation par voie radicalaire, ledit amorceur étant soluble dans ledit solvant protique,
iii) au moins un monomère polymérisable par voie radicalaire, et
iv) au moins un tensioactif.

Les solutions électrolytiques renfermant au moins un tensioactif de formules (II), (IV) ou (V) telles que définies précédemment, sont préférées selon l'Invention.

Parmi de telles solutions, les solutions électrolytiques particulièrement préférées sont choisies parmi celles renfermant :
i) un solvant protique choisi parmi l'eau, l'éthylèneglycol, l'éthanol, l'acide acétique et leurs mélanges ;
ii) au moins un amorceur soluble choisi parmi les sels d'aryle diazonium,
iii) au moins un monomère polymérisable choisi parmi les monomères vinyliques de solubilité finie dans ledit solvant protique, et
iv) au moins un tensioactif de formule (III), (IV) ou (V) telles que définies précédemment.

Enfin, la présente Invention a pour objet l'utilisation d'au moins une solution électrolytique telle que définie ci-dessus pour la fabrication de films organiques copolymériques greffés sur des surfaces conductrices ou semi-conductrices de l'électricité.

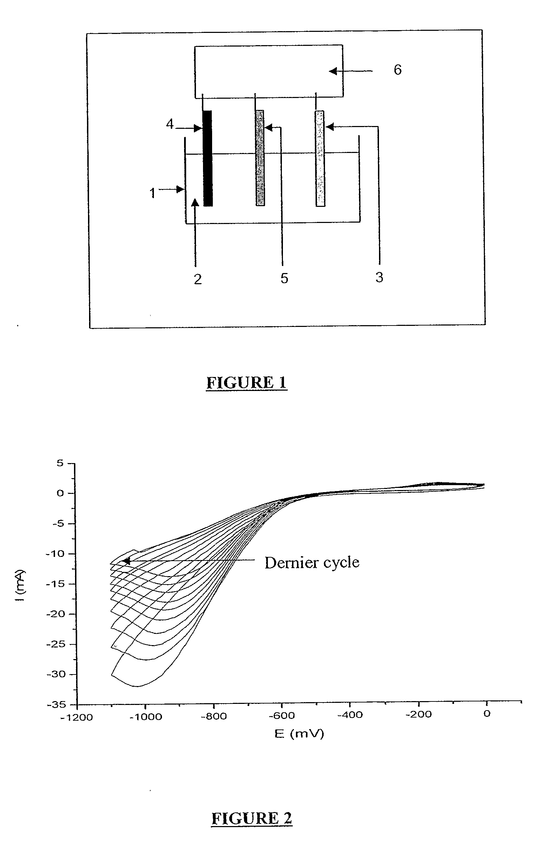

Outre les dispositions qui précèdent, l'Invention comprend encore d'autres dispositions qui ressortiront de la description qui va suivre, qui se réfère à des exemples de formation de films organiques copolymériques sur des surfaces d'acier conformément au procédé de l'Invention, ainsi qu'aux figures 1 à 12 annexées dans lesquelles :
- la figure 1 représente la cellule d'électrolyse utilisée à l'exemple 1 ci-après. Cette cellule d'électrolyse est constituée d'une cuve d'électrolyse 1 remplie d'une solution électrolytique 2 dans laquelle sont disposées trois électrodes : une électrode de travail en inox 3, une contre électrode 4 constituée d'une plaque de carbone et une électrode de référence 5 qui est une électrode au calomel saturé (SCE). Les trois électrodes sont reliées à un potentiomètre 6 ;
- la figure 2 représente le voltamogramme (voltamétrie cyclique ; 10 cycles) enregistré à partir d'une solution aqueuse d'acrylonitrile (5 M), de tetraéthylammonium paratoluènesulfonate (1,46 M), et de tetrafluoroborate de 4-nitrophényldiazonium (0,0018 M), pH = 2,02, agitation, électrode de travail en inox, vitesse de balayage de 10 mV/s ;

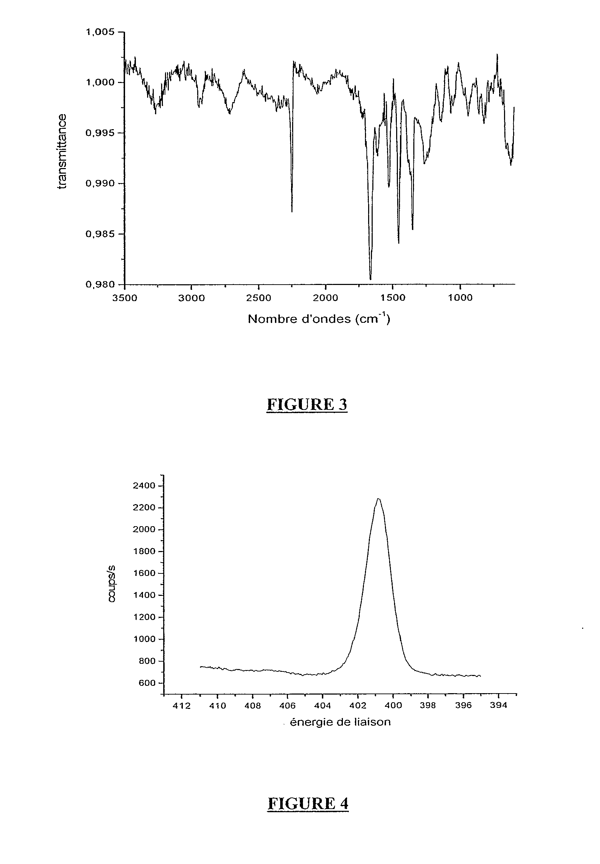

- la figure 3 représente le spectre infrarouge (transmittance (%) en fonction du nombre d'onde en cm⁻¹) du film organique copolymérique obtenu à partir de la solution électrolytique décrite ci-dessus pour la figure 2, après rinçage avec une solution eau/éthanol (50/50 v/v) puis à l'acétone ;
- la figure 4 représente le spectre N 1s en spectroscopie des photoélectrons aux rayons X (XPS) du film organique copolymérique obtenu à partir de la solution électrolytique décrite ci-dessus pour la figure 2 ;

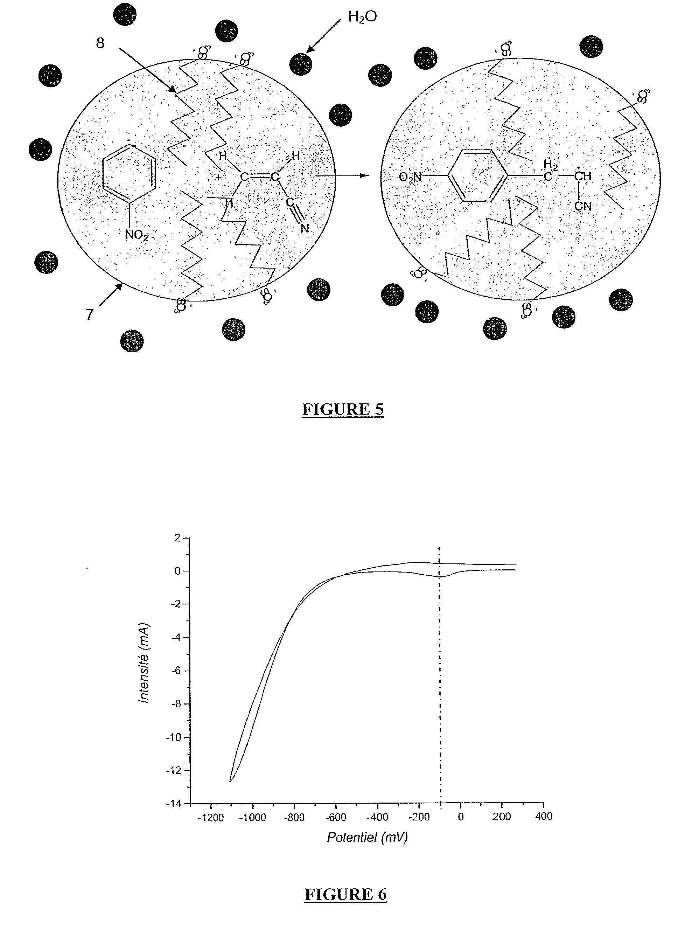

- la figure 5 représente le SCHEMA E d'une polymérisation radicalaire micellaire (micelles 7) de l'acrylonitrile en présence de tetraéthylammonium paratoluènesulfonate (tensioactif 8), et de tetrafluoroborate de 4-nitrophényldiazonium en solution aqueuse conduisant des macroradicaux ;
- la figure 6 représente le voltamogramme (voltamétrie cyclique : premier cycle) enregistré à partir d'une solution aqueuse renfermant du butylméthacrylate (BuMA) 0,69 M, du dodécylsulfate de sodium 8 mM, et du tétrafluoroborate de 4-nitrobenzènediazonium 2 mM, pH = 1,70, agitation par barbotage d'argon, électrode de travail en inox, vitesse de balayage de 10 mV/s ;

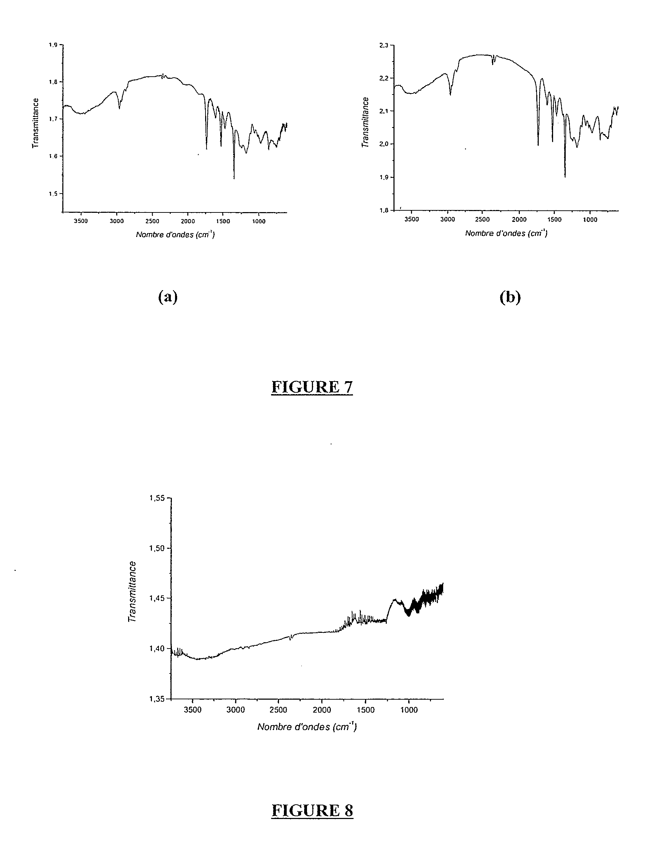

- la figure 7 représente le spectre infrarouge (transmittance) (%) en fonction du nombre d'onde en cm⁻¹) du film organique copolymérique obtenu à partir de la solution électrolytique décrite ci-dessus pour la figure 6 avant (7a) et après (7b) rinçage au diméthylformamide sous ultrasons pendant 3 minutes ;
- la figure 8 représente le spectre infrarouge (transmittance (%) en fonction du nombre d'onde en cm⁻¹) d'une électrode de travail soumise aux mêmes conditions que celles données pour la figure 6 mais à partir d'une solution électrolytique aqueuse ne faisant pas partie de l'Invention (sans amorceur), contenant uniquement du butylméthacrylate (BuMA) 0,69 M et du dodécylsulfate de sodium 8 mM;

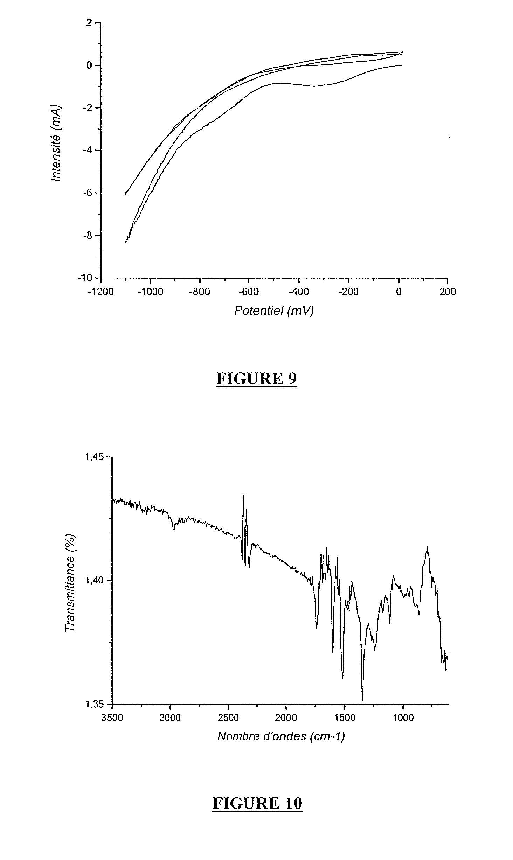

- la figure 9 représente le voltamogramme (voltamétrie cyclique : premier et dernier cycles) enregistré à partir d'une solution électrolytique aqueuse renfermant 0,69 M de BuMA, 8 mM de bromure de tetradécyltriméthyle ammonium, et 2 mM de tétrafluoroborate de 4-nitrobenzènediazonium, pH = 1,70, sous agitation par bullage d'argon, électrode de travail en inox, vitesse de balayage de 10 mV/s ;
- la figure 10 représente le spectre infrarouge (transmittance (%) en fonction du nombre d'onde en cm⁻¹) par réflexion (IRRAS) du film organique copolymériques obtenu à partir de la solution électrolytique décrite ci-dessus pour la figure 9, après rinçage avec une solution eau/éthanol (50/50 v/v) puis à l'acétone ;

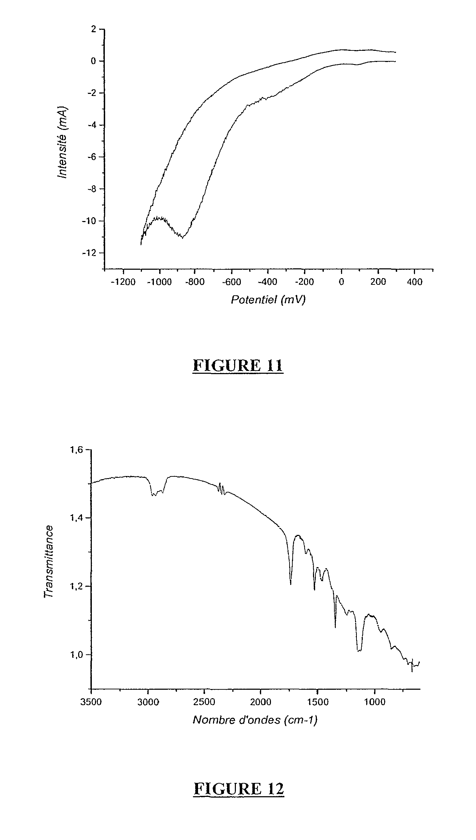

- la figure 11 représente le voltamogramme (voltamétrie cyclique : un seul cycle) enregistré à partir d'une solution électrolytique aqueuse renfermant 0,69 M de butyle méthacrylate, 8 mM de Brij ® 35, et 2 mM de tétrafluoroborate de 4-nitrobenzènediazonium, pH = 1,70, sous agitation par barbotage d'argon, électrode de travail en inox, vitesse de balayage de 10 mV/s ;
- la figure 12 représente le spectre infrarouge (transmittance (%) en fonction du nombre d'onde en cm⁻¹) par réflexion (IRRAS) du film organique copolymérique obtenu à partir de la solution électrolytique décrite ci-dessus pour la figure 11, après rinçage avec une solution eau/éthanol (50/50 v/v) puis à l'acétone.

Il doit être entendu toutefois que ces exemples ne sont donnés qu'à titre purement illustratif de l'Invention dont ils ne constituent en aucune manière une quelconque limitation.

### EXEMPLES

Les exemples présentés ci-après ont été réalisés sur des surfaces constituées de plaques d'acier inoxydable 316 d'environ 6 cm².

### EXEMPLE 1: SYNTHESE DANS L'EAU D'UN FILM MINCE DE POLYACRYLONITRILE GREFFE SUR UNE SURFACE D'ACIER INOXYDABLE.

Dans cet exemple et les suivants, l'électrolyse a été pratiquée selon le montage représenté à la figure 1, dans une cuve en téflon 1 remplie d'une solution électrolytique 2 et comportant trois électrodes. Une électrode de référence 5 qui est une électrode au calomel saturé (SCE), une contre électrode 4 en platine et une électrode de travail 3 en inox comme indiqué précédemment. Les électrodes ont été couplées à un potentiomètre 6 de marque EG & G 273A vendu par la société PAR (Princetown Applied Research).

Dans cet exemple la solution électrolytique suivante a été préparée :

Le solvant protique est de l'eau désionisée contenant 5 mol.l⁻¹ (a) d'acrylonitrile (dont la solubilité dans l'eau désionisée est d'environ 1 mol.l⁻¹), 1,45 mol.l⁻¹ de (b) tetraéthylammonium paratoluènesulfonate (tensioactif anionique) et 1,8 10⁻³ mol.l⁻¹ de (c) 4-nitrophényl diazonium tétrafluoroborate (amorceur). Le pH de la solution a été ajusté à 2 par ajout d'une solution d'acide sulfurique. Les molécules (a), (b) et (c) utilisées sont représentées ci-après : 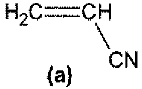 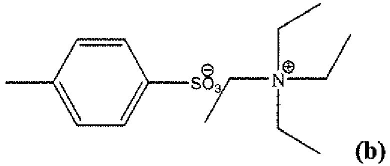 et

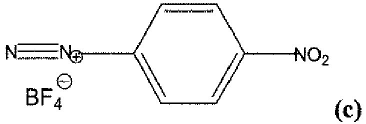

Quelques heures avant leur utilisation, les plaques d'acier (électrodes de travail) ont été poncées au papier de verre 10 µm puis polies à l'aide d'une solution de poudre de diamant d'une granulométrie de 2 µm.

Les plaques ont ensuite été traitées pendant cinq minutes aux ultrasons dans l'éthanol puis dans l'acétone.

La solution électrolytique a été placée dans la cellule d'électrolyse à trois électrodes. La solution électrolytique a été agitée grâce à un agitateur magnétique (non représenté sur la figure 1), la polarisation de l'électrode étant réalisée par voltamétrie cyclique, 10 cycles ont été effectués à une vitesse de balayage de 10 mV/s entre le potentiel d'équilibre du système voisin de 0 V et -1,1 V.

Le voltamogramme obtenu est représenté sur la figure 2 annexée.

On observe majoritairement le régime de réduction des protons (qui démarre vers -0,6 V), celui-ci masque la réduction du cation du sel de diazonium (généralement situé vers -0,2 V) suivi par un pic de réduction centré vers -1 V au premier balayage. Ces pics et leurs évolutions sont caractéristiques d'un phénomène de passivation de l'électrode par son recouvrement progressif d'un film de polymère. Ce film est en effet peu soluble dans l'électrolyte et représente donc une barrière aux réactions redox. Ceci se traduit par une baisse du courant dans la cellule d'électrolyse.

Les surfaces modifiées ont ensuite été plongées pendant 3 min dans du diméthylformamide (DMF) sous ultrasons. Le DMF est réputé être l'un des meilleurs solvants du polyacrylonitrile (PAN). Par ce traitement on élimine un éventuel polymère non greffé à la surface du métal. Les surfaces ont ensuite été plongées dans un mélange 50/50 (v/v) eau/éthanol sous agitation afin d'éliminer les traces éventuelles de DMF et finalement rincées à l'acétone.

Les échantillons ainsi traités ont ensuite été analysés par spectroscopie infra rouge afin d'en déterminer la structure moléculaire. Le spectre infra rouge obtenu est présenté sur la figure 3 annexée.

Sur ce spectre on trouve les bandes d'absorption caractéristiques du polyacrylonitrile (PAN) et notamment la bande caractéristique du groupement nitrile vers 2240 cm⁻¹. Son intensité est voisine de 1,5 % de transmittance ce qui équivaut a une épaisseur d'environ 50 nanomètres. Les bandes d'absorption du polynitrophénylène sont également visibles à 1530 et 1350 cm⁻¹.

Compte tenu des intensités relatives des bandes d'absorption des deux polymères, on peut estimer que ce film copolymérique comporte 1/10 de polynitrophénylène (l'équivalent d'une épaisseur de 5 nm environ) pour 9/10 de PAN (environ 50 nm). Cette estimation se base sur des échantillons de polynitrophénylène et de PAN purs, préparés indépendamment et caractérisés par IR et profilométrie.

Une analyse par spectrométrie ESCA (*Electron Spectrometry for Chemical Analysis -* Spectrométrie électronique pour l'analyse chimique, il s'agit de la technique dite XPS : spectroscopie des photoélectrons aux rayons X) a également été réalisée sur cet échantillon, celle-ci permet de vérifier que la couche externe du polymère greffé sur la surface du métal correspond bien au polyvinylique ici le PAN. En effet cette technique n'est sensible qu'aux 15 derniers nanomètres de l'échantillon, or on ne trouve pas dans cette zone le marqueur XPS du polynitrophénylène, le groupement NO₂. Celui-ci présente en effet un pic N 1s centré sur 407 eV, alors que le pic N 1s d'un groupement nitrile est centré sur 400 eV. La figure 4 annexée représente le spectre N 1s de l'échantillon précédent.

Le mécanisme proposé de formation du film est lié au passage du courant qui produit des radicaux à partir du sel de diazonium selon le SCHEMA B ci-après :

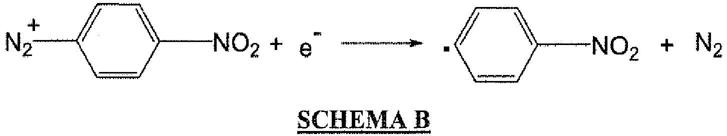

Le radical formé se greffe sur le métal (électrode de travail) selon le SCHEMA C ci-après :

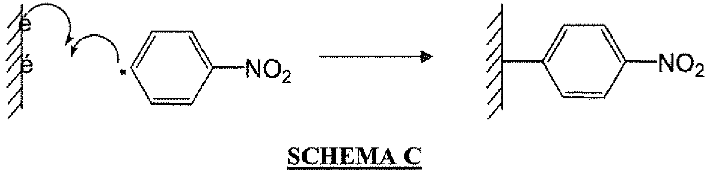

L'excès de radicaux nitrophényle peut :
- soit participer à l'épaississement de la couche greffée, selon le mécanisme représenté sur le SCHEMA D ci-après : 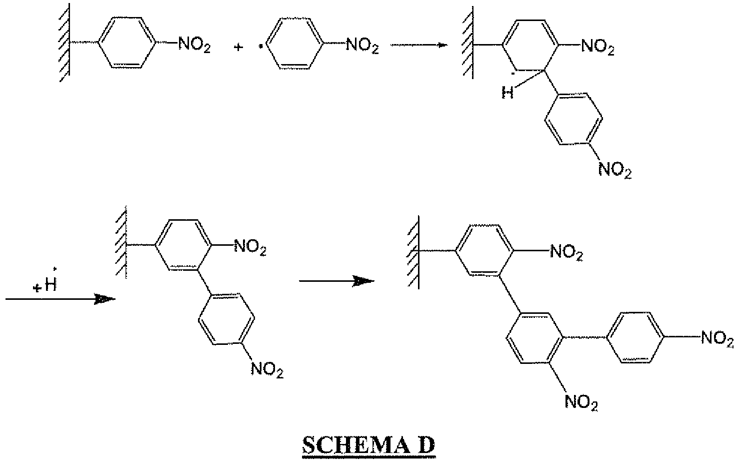
- soit intégrer une micelle 7 de monomère et amorcer la réaction de polymérisation radicalaire pour conduire à des macroradicaux selon le SCHEMA E représenté sur la figure 5 annexée.

Dans le cas d'un milieu acide, le passage du courant peut également former des radicaux hydrogène selon la réaction suivante :

H^{⊕} + e⁻ → H^{•}

Il existe toujours un équilibre entre les espèces ; la formation de radicaux hydrogène, bien que de moindre importance, est observée à des pH moins acides, le même mécanisme peut dès lors s'appliquer.

Une partie des radicaux dimérise et donne de l'hydrogène gazeux :

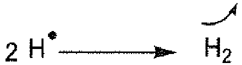

L'autre partie peut, comme les radicaux nitrophényle, amorcer la polymérisation dans les micelles d'acrylonitrile selon la réaction représentée sur le SCHEMA F ci-après :

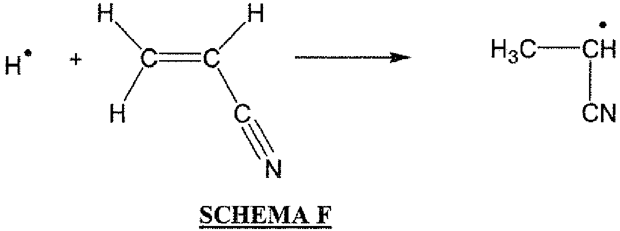

On obtient alors des macro radicaux dans les micelles selon la réaction représentée sur le SCHEMA G ci-après :

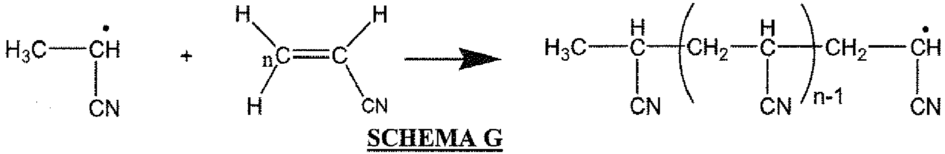

Une réaction de terminaison selon le SCHEMA H ci-après peut avoir lieu, dans la micelle, le polymère restera alors en solution :

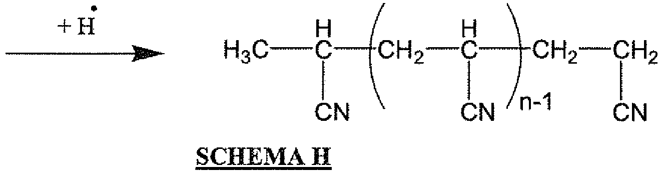

Ces macro radicaux peuvent également réagir sur le polynitrophénylène greffé sur la surface de l'électrode pour former un film greffé selon le SCHEMA I ci-aprés :

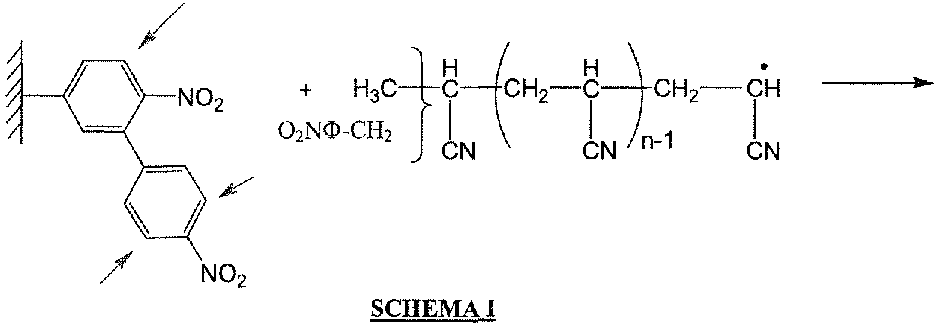

Selon la règle de Hammet, le radical attaque en ortho du groupe NO₂ mésomère attracteur, puis il s'en suit une réaromatisation du cycle à six atomes de carbone par perte d'un radical hydrogène selon la réaction représentée sur le SCHEMA J ci-après :

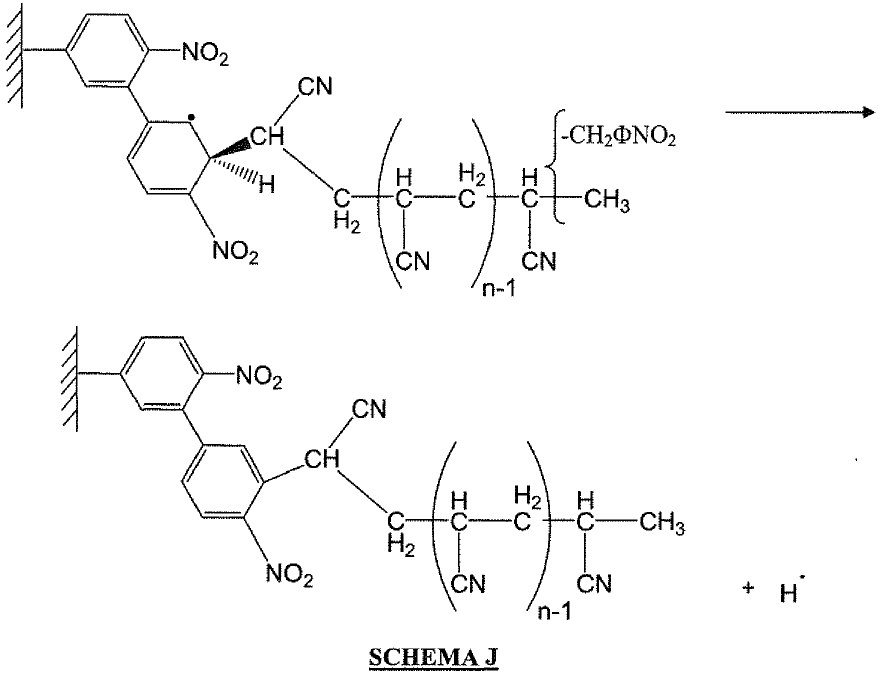

### EXEMPLE 2 : GREFFAGE D'UN FILM DE POLYBUTYLE METHACRYLATE (PBuMA) SUR UNE SURFACE D'INOX PAR ELECTROPOLYMERISATION EN EMULSION (SURFACTANT ANIONIQUE).

Les surfaces ont préalablement été poncées au papier de verre 10 µm puis avec une solution de poudre de diamant d'une granulométrie de 3 µm. Les surfaces ont ensuite été traitées pendant 5 minutes aux ultrasons dans l'éthanol puis dans l'acétone.

Le milieu réactionnel était composé d'une solution électrolytique aqueuse de butyle méthacrylate (BuMA, solubilité < 0,1 mol.l⁻¹ dans l'eau) à 0,69 mol.l⁻¹, de dodécylsulfate de sodium (SDS) à 8 mmole.l⁻¹ et de 4-nitrobenzënediazonium tétrafluoroborate à 2 mmol.l⁻¹. Le pH de la solution a été ajusté à 1,70 par ajout d'acide sulfurique pur. L'agitation a été maintenue par barbotage d'argon dans la solution lors de l'électrolyse. Les molécules utilisées dans cet exemple sont représentées après :

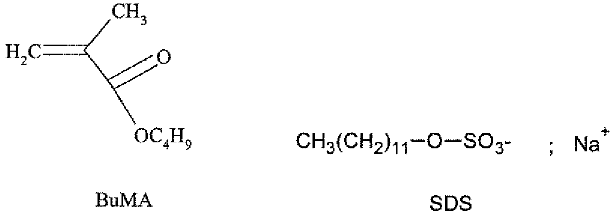

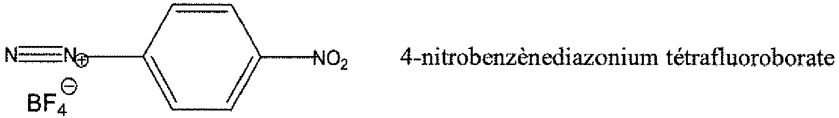

Les paramètres électrochimiques choisis ici étaient : 2 cycles de l'équilibre à -1,1 V à une vitesse de 10 mV/s sous agitation par barbotage d'argon.

Le voltamogramme, obtenu est présenté sur la figure 6 annexée.

Sur ce voltamogramme, on distingue la réduction du cation diazonium vers -0,1 V/SCE, suivi du régime de réduction des protons qui débute vers -0,6 V/SCE.

L'échantillon a ensuite subi un rinçage au DMF sous ultrasons pendant 3 minutes et a finalement été analysé par spectroscopie infrarouge. Les spectres IR ainsi obtenus (avant rinçage (7a) : Liaison carbonyle : 13% de transmittance et après rinçage (7b) : Liaison carbonyle : 12.5% de transmittance) sont représentés sur la figure 7 annexée.

La bande à 1740 cm⁻¹ correspond aux groupements carbonyle CO de la fonction ester COOC₄H₉.

On a donc bien un polyBuMa greffé sur la surface de l'électrode. Sa transmittance est voisine de 13 %, ce qui correspond à une épaisseur de film d'environ 100 nanomètres.

On note la présence de bandes à 1530 cm⁻¹ et 1350 cm⁻¹ qui correspondent aux groupements NO₂. La bande à 1600 cm⁻¹ correspond aux doubles liaisons du benzène.

On reconnaît donc le spectre d'un copolymère poly (nitrophénylène bloc BuMA).

Compte tenu des intensités relatives des bandes d'absorption des deux polymères, on peut estimer que la couche greffée est composée d'environ 15 nm de polynitrophénylène (greffé sur le métal) et d'environ 100 nm de PAA greffé sur ce dernier (épaisseur globale 115 nm).

Une analyse ESCA (XPS) a également été réalisée sur cet échantillon (non représentée), celle-ci permet de vérifier que la couche externe du polymère greffé sur la surface du métal correspond bien au polyvinylique ici le polyBuMA. En effet cette technique n'est sensible qu'aux 15 derniers nanomètres de l'échantillon, or on ne trouve pas dans cette zone le marqueur XPS de l'azote. Cela permet d'affirmer que la couche externe de l'échantillon ne contient que du polyBuMA.

Les mêmes expériences ont été effectuées sans ajouter l'amorceur, c'est-à-dire le sel de diazonium, dans la solution électrolytique.

Le spectre infrarouge du film obtenu dans ces conditions est représenté sur la figure 8 annexée.

On constate que dans ces conditions, on ne construit pas de film de polymère (absence de la sous-couche d'accroche). Cette expérience valide le mécanisme général de construction de ces couches greffées.

Une analyse XPS a également été réalisée (non représentée). L'absence de niveaux d'azote 1 s permet d'affirmer que la couche externe de l'échantillon (au moins les 15 derniers nanomètres) ne contient que du pBuMA.

Ces deux premiers exemples permettent de montrer que le procédé conforme à l'Invention autorise l'utilisation de monomères de solubilités dans l'eau très différentes pour former des films organiques greffés sur des substrats d'acier inoxydable.

Les deux exemples suivants sont consacrés à l'influence de la nature du tensioactif et permettent de conclure que les différentes familles de tensioactifs autorisent bien la formation des films de polymères dans l'eau telle que décrite précédemment.

### EXEMPLE 3 : GREFFAGE D'UN FILM DE POLYBUTYLE METHACRYLATE (PBuMA) SUR UNE SURFACE D'INOX PAR ELECTROPOLYMERISATION EN EMULSION (TENSIOACTIF CATIONIQUE).

L'électrolyse a été pratiquée dans une cellule en téflon à trois électrodes. L'électrode de référence est une SCE, la contre électrode est une lame de carbone et l'électrode de travail est en acier inoxydable (316 L). Les électrodes ont été couplées à un potentiomètre de marque EG & G 273A.

Les surfaces ont préalablement été poncées au papier de verre 10 µm puis avec une solution de poudre de diamant d'une granulométrie de 3 µm. Les surfaces ont ensuite été traitées pendant 5 minutes aux ultrasons dans l'éthanol puis dans l'acétone.

Le milieu réactionnel était composé d'une solution électrolytique aqueuse renfermant du butyle méthacrylate à 0,69 mol.l⁻¹, du bromure de tetradécyltriméthyle ammonium (TTAB) à 8 mmole.l⁻¹ et du tétrafluoroborate de 4-nitrobenzènediazonium à 4 mmole.l⁻¹. Le pH de la solution a été ajusté à 1,7 par ajout d'acide sulfurique pur. L'agitation a été maintenue par barbotage d'argon dans la solution lors de l'électrolyse.

Les paramètres électrochimiques choisis ici étaient : 5 cycles du potentiel d'équilibre à -1,1 V à une vitesse de 10 mV/s, sous agitation par barbotage d'argon.

Le voltamogramme obtenu est représenté sur la figure 9 annexée.

Sur ce voltamogramme, on distingue la réduction du cation diazonium vers -0,3 V/SCE, suivi du régime de réduction des protons qui débute vers -0,5 V/SCE.

L'échantillon a ensuite subi le même traitement de rinçage que celui décrit ci-dessus à l'exemple 1 et a finalement été analysé par spectroscopie infrarouge en réflexion (IRRAS). Le spectre infrarouge IRRAS du film obtenu dans ces conditions est représenté sur la figure 10 annexée.

La bande à 1740 cm⁻¹ correspond aux groupements carbonyle CO de la fonction ester COOC₄H₉.

On a donc bien un polyBuMA greffé sur la surface de l'électrode. Sa transmittance est voisine de 2 %, ce qui correspond à une épaisseur de PBuMA d'environ 20 nanomètres.

On note la présence de bandes à 1530 cm⁻¹ et 1350 cm⁻¹ (environ 3 % de transmittance) qui correspondent aux groupements NO₂.

La bande à 1600 cm⁻¹ correspond aux doubles liaisons du benzène.

On reconnaît donc le spectre d'un copolymère poly (nitrophénylène BuMA).

Compte tenu des intensités relatives des bandes d'absorption des deux polymères, on peut estimer que la couche greffée est composée d'environ 5 nm de polynitrophénylène (greffé sur le métal) et d'environ 20 nm de PBuMA greffé sur ce dernier.

La très faible épaisseur de cet échantillon peut expliquer l'absence de pic de passivation constaté sur les voltamogrammes. Seul, un pallier de réduction est observé au premier balayage vers - 0,8 V (voir figure 9 annexée).

### EXEMPLE 4 : GREFFAGE D'UN FILM DE POLYBUTYLE METHACRYLATE (PBuMA) SUR UNE SURFACE D'INOX PAR ELECTROPOLYMERISATION EN EMULSION (SURFACTANT NEUTRE).

L'électrolyse a été pratiquée dans une cellule en téflon à trois électrodes. L'électrode de référence est une SCE, la contre électrode est une lame de carbone et l'électrode de travail est en acier inoxydable (316 L). Les électrodes ont été couplées à un potentiomètre de marque EG & G 273A.

Les surfaces ont préalablement été poncées au papier de verre 10 µm puis avec une solution de poudre de diamant d'une granulométrie de 3 µm. Les surfaces ont ensuite été traitées pendant 5 minutes aux ultrasons dans l'éthanol puis dans l'acétone.

Le milieu réactionnel était composé d'une solution électrolytique aqueuse de butyle méthacrylate à 0,69 mol.l⁻¹, de lauryléther de polyéthylèneglycol (Brij ® 35 vendu par la société Aldrich) à 8 mmole.l⁻¹ et de tétrafluoroborate de 4-nitrobenzènediazonium à 4 mmole.l⁻¹. Le pH de la solution a été ajusté à 1,7 par ajout d'acide sulfurique pur. L'agitation a été maintenue par barbotage d'argon dans la solution lors de l'électrolyse.

Le Brij ® 35 utilisé dans cet exemple a la structure suivante :

CH₃-(CH₂)₁₁-O-(CH₂-CH₂-O)₂₃-H

Les paramètres électrochimiques choisis ici étaient : 1 cycle du potentiel d'équilibre à -1,1V à une vitesse de 10 mV/s, sous agitation par barbotage d'argon.

Le voltamogramme du film ainsi obtenu est représenté sur la figure 11 annexée.

Sur ce voltamogramme, on distingue la réduction du cation diazonium, vers -0,3 V/SCE, suivi du régime de réduction des protons qui débute vers -0,6 V/SCE.

On observe également un pic de réduction centré vers - 0,85 V. Ce pic est caractéristique d'un phénomène de passivation de l'électrode par son recouvrement d'un film de polymère. Ce film, peu soluble dans l'électrolyte, représente donc une barrière aux réactions redox, ce qui se traduit par une baisse du courant dans la cellule d'électrolyse.

L'échantillon a ensuite subi le même traitement de rinçage que celui décrit ci-dessus à l'exemple 1 et a finalement été analysé par IRRAS. Le spectre infrarouge IRRAS du film obtenu dans ces conditions est représenté sur la figure 12 annexée.

La bande à 1740 cm⁻¹ correspond aux groupements carbonyle CO de la fonction ester COOC₄H₉.

On a donc bien un polyBuMA greffé sur la surface de l'électrode. Sa transmittance est voisine de 15 %, ce qui correspond à une épaisseur de PBuMA d'environ 120 nanomètres.

On note la présence de bandes à 1530 cm⁻¹ et 1350 cm⁻¹ (environ 10 % de transmittance) qui correspondent aux groupements NO₂.

La bande à 1600 cm⁻¹ correspond aux doubles liaisons du benzène.

On reconnaît donc le spectre d'un copolymère poly (nitrophénylène BuMA).

Compte tenu des intensités relatives des bandes d'absorption des deux polymères, on peut estimer que la couche greffée est composée d'environ 15 nm de polynitrophénylène (greffé sur le métal) et d'environ 120 nm de PBuMA greffé sur ce dernier.

## Revendications

1. Procédé de formation d'un film organique copolymérique sur une surface conductrice ou semi-conductrice de l'électricité, par électrolyse d'une solution électrolytique jusqu'à obtention dudit film organique copolymérique greffé sur ladite surface, ledit procédé étant **caractérisé en ce que** :
a) la solution électrolytique renferme :
i) au moins un solvant protique,
ii) au moins un sel d'aryle diazonium, et
iii) au moins un monomère vinylique,
iv) au moins un tensioactif ;
b) l'électrolyse de la solution électrolytique est réalisée à un potentiel de réduction au moins égal au potentiel de réduction dudit amorceur.

2. Procédé selon la revendication 1, **caractérisé en ce que** la surface conductrice ou semi-conductrice de l'électricité est choisie parmi l'inox, l'acier, le fer, le cuivre, le nickel, le cobalt, le niobium, l'aluminium, l'argent, le titane, le silicium avec ou sans son oxyde, le nitrure de titane, le tungstène, le nitrure de tungstène, le tantale, le nitrure de tantale et les surfaces métalliques nobles composées par au moins un métal choisi parmi l'or, le platine, l'iridium et le platine iridié.

3. Procédé selon la revendication 1 ou 2, **caractérisé en ce que** le solvant protique est choisi dans le groupe constitué par l'eau, l'acide acétique, les solvants hydroxylés, les glycols liquides de faible poids moléculaire, et leurs mélanges.

4. Procédé selon l'une quelconque des revendications précédentes, **caractérisé en ce que** le solvant protique est utilisé en mélange avec un solvant aprotique étant entendu que le mélange résultant présente les caractéristiques d'un solvant protique.

5. Procédé selon l'une quelconque des revendications précédentes, **caractérisé en ce que** les sels d'aryle diazonium sont choisis parmi les composés de formule (I) suivante :
R-N₂⁺, A⁻ (I)
dans laquelle :
- A représente un anion monovalent et
- R représente un groupe aryle.

6. Procédé selon l'une quelconque des revendications 1 à 4, **caractérisé en ce que** l'amorceur de polymérisation par voie radicalaire est choisi parmi le tétrafluoroborate de phényldiazonium, le tétrafluoroborate de 4-nitrophényldiazonium, le tétrafluoroborate de 4-bromophényldiazonium, le chlorure de 2-méthyl-4-chlorophényldiazonium, le tétrafluoroborate de 4-benzoylbenzènediazonium, le tétrafluoroborate de 4-cyanophényldiazonium, le tétrafluoroborate du 4-carboxyphényldiazonium, le tétrafluoroborate de 4-acétamidophényldiazonium, le tétrafluoroborate de l'acide 4-phénylacétique diazonium, le sulfate de 2-méthyl-4-[(2-méthylphényl)diazényl]benzènediazonium, le chlorure de 9,10-dioxo-9,10-dihydro-1-anthracènediazonium, le tétrafluoroborate de 4-nitronaphtalènediazonium, et le tétrafluoroborate de naphtalènediazonium.

7. Procédé selon l'une quelconque des revendications précédentes, **caractérisé en ce que** le monomère vinylique est choisi parmi les monomères de formule (II) suivante : 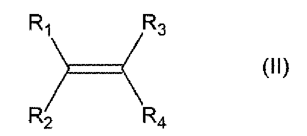 dans laquelle les groupes R₁ à R₄, identiques ou différents, représentent un atome monovalent non métallique choisi parmi les atomes d'halogène et d'hydrogène, ou un groupe chimique saturé ou insaturé, choisi parmi les groupes alkyle, aryle, le groupe -COOR₅ dans lequel R₅ représente un atome d'hydrogène ou un groupe alkyle en C₁-C₆, nitrile, carbonyle, amine ou amide.

8. Procédé selon l'une quelconque des revendications précédentes, **caractérisé en ce que** le tensioactif est un tensioactif anionique de formule (III) suivante :
R₆-A⁻,Cat⁺ (III)
dans laquelle :
- R₆ représente un groupe aryle ou alkyle en C₁-C₂₀,
- A- est un anion choisi parmi les sulfonates, les sulfates, les phosphates, les carboxylates, et les sulfosuccinates,
- Cat⁺ est un contre ion cationique choisi parmi l'ion ammonium, les ammoniums quaternaires et les cations alcalins.

9. Procédé selon la revendication 8, **caractérisé en ce que** les tensioactifs anioniques de formule (III) sont choisis parmi le paratoluènesulfonate de tetraéthylammonium, le dodécylsulfate de sodium, le palmitate de sodium, le stéarate de sodium, le myristate de sodium, le di(2-éthylhexyl)sulfosuccinate de sodium, le méthylbenzène sulfonate et l'éthylbenzène sulfonate.

10. Procédé selon l'une quelconque des revendications 1 à 7, **caractérisé en ce que** le tensioactif est un tensioactif cationique choisi parmi les ammoniums quaternaires de formule (IV) suivante :
(R₇)₄-N⁺, An⁻ (IV)
dans laquelle :
- les groupes R₇, identiques ou différents, représentent une chaîne alkyle en C₁-C₂₀,
- An⁻ est un contre ion anionique.

11. Procédé selon la revendication 10, **caractérisé en ce que** les ammoniums quaternaires de formule (IV) sont choisis parmi le bromure de tetradécyltriméthyle ammonium, les halogénures d'alkylpyridinium portant une chaîne aliphatique en C₁-C₁₈ et les halogénures d'alkylammonium.

12. Procédé selon l'une quelconque des revendications 1 à 7, **caractérisé en ce que** le tensioactif est un tensioactif zwittérionique choisi parmi les composés de formule (V) suivante :
Z⁻-R₈-Z⁺ (V)
dans laquelle :
- R₈ représente une chaîne alkyle en C₁-C₂₀,
- Z⁻ représente une fonction chargée négativement portée par R₈,
- Z⁺ représente une fonction chargée positivement portée par R₈.

13. Procédé selon l'une quelconque des revendications 1 à 7, **caractérisé en ce que** le tensioactif est non-ionique et est choisi parmi les tensioactifs polyéthoxylés et les polyols.

## Patentansprüche

1. Verfahren zur Bildung eines organischen Copolymerfilms auf einer elektrisch leitenden oder halbleitenden Oberfläche durch Elektrolyse einer Elektrolytlösung bis zum Erhalt des organischen Copolymerfilms, der auf die genannte Oberfläche gepfropft ist, wobei das Verfahren **dadurch gekennzeichnet ist, dass**:
a) die Elektrolytlösung umfasst:
i) wenigstens ein protisches Lösungsmittel,
ii) wenigstens ein Aryldiazoniumsalz und
iii) wenigstens ein Vinylmonomer,
iv) wenigstens ein grenzflächenaktives Mittel;
b) die Elektrolyse der Elektrolytlösung bei einem Reduktionspotential durchgeführt wird, das wenigstens gleich dem Reduktionspotential des Initiators ist.

2. Verfahren gemäß Anspruch 1, dadurch **gekennzeich**n e t , dass die elektrisch leitende oder halbleitende Oberfläche ausgewählt ist aus Inox, Stahl, Eisen, Kupfer, Nickel, Kobalt, Niob, Aluminium, Silber, Titan, Silicium, mit seinem Oxid oder ohne sein Oxid, Titannitrid, Wolfram, Wolframnitrid, Tantal, Tantalnitrid und Edelmetalloberflächen, die aus wenigstens einem Metall, ausgewählt aus Gold, Platin, Iridium und iridiertem Platin, bestehen.

3. Verfahren gemäß Anspruch 1 oder 2, **dadurch gekennzeichnet, dass** das protische Lösungsmittel aus der Gruppe, bestehend aus Wasser, Essigsäure, hydroxylierten Lösungsmitteln, flüssigen Glycolen mit niedrigem Molekulargewicht und deren Gemischen, ausgewählt ist.

4. Verfahren gemäß einem der vorangehenden Ansprüche, **dadurch gekennzeichnet, dass** das protische Lösungsmittel im Gemisch mit einem aprotischen Lösungsmittel verwendet wird, vorausgesetzt, dass das resultierende Gemisch die Charakteristika eines protischen Lösungsmittels aufweist.

5. Verfahren gemäß einem der vorangehenden Ansprüche, **dadurch gekennzeichnet, dass** die Aryldiazoniumsalze ausgewählt sind aus den Verbindungen der folgenden Formel (I):
R-N₃⁺, A⁻ (I)
in der:
- A ein einwertiges Anion darstellt und
- R eine Arylgruppe darstellt.

6. Verfahren gemäß einem der Ansprüche 1 bis 4, **dadurch gekennzeichnet, dass** der Initiator der radikalischen Polymerisation ausgewählt ist aus Phenyldiazoniumtetrafluorborat, 4-Nitrophenyldiazoniumtetrafluorborat, 4-Bromphenyldiazoniumtetrafluorborat, 2-Methyl-4-chlorphenyldiazoniumchlorid, 4-Benzoylbenzoldiazoniumtetrafluorborat, 4-Cyanophenyldiazoniumtetrafluorborat, 4-Carboxyphenyldiazoniumtetrafluorborat, 4-Acetamidophenyldiazoniumtetrafluorborat, 4-Phenylessigsäurediazoniumtetrafluorborat, 2-Methyl-4-[(2-methylphenyl)diazenyl]benzoldiazoniumsulfat, 9,10-Dioxo-9,10-dihydro-1-anthracendiazoniumchlorid, 4-Nitronaphthalindiazoniumtetrafluorborat und Naphthalindiazoniumtetrafluorborat.

7. Verfahren gemäß einem der vorangehenden Ansprüche, **dadurch gekennzeichnet, dass** das Vinylmonomer augewählt ist aus den Monomeren der folgenden Formel (II): 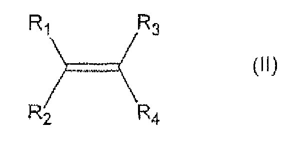 in der die Gruppen R₁ bis R₄, die gleich oder unterschiedlich sind, ein einwertiges nichtmetallisches Atom, ausgewählt aus Halogenatomen und Wasserstoffatomen, oder eine gesättigte oder ungesättigte chemische Gruppe, ausgewählt aus Alkyl-, Arylgruppen, der Gruppe -COOR₅, in der R₅ ein Wasserstoffatom oder eine C₁-C₆-Alkylgruppe darstellt, Nitril, Carbonyl, Amin oder Amid, darstellen.

8. Verfahren gemäß einem der vorangehenden Ansprüche, **dadurch gekennzeichnet, dass** das grenzflächenaktive Mittel ein anionisches grenzflächenaktives Mittel der folgenden Formel (III) ist:
R₆-A⁻,Cat⁺ (III)
in der:
- R₆ eine Aryl- oder C₁-C₂₀-Alkylgruppe darstellt,
- A⁻ ein Anion ist, ausgewählt aus Sulfonaten, Sulfaten, Phosphaten, Carboxylaten und Sulfosuccinaten,
- Cat⁺ ein kationisches Gegenion ist, ausgewählt aus dem Ammoniumion, quaternären Ammoniumionen und Alkalikationen.

9. Verfahren gemäß Anspruch 8, dadurch **gekennzeich**n e t, dass die anionischen grenzflächenaktiven Mittel der Formel (III) ausgewählt sind aus Tetraethylammonium-paratoluolsulfonat, Natriumdodecylsulfat, Natriumpalmitat, Natriumstearat, Natriummyristat, Natrium-di(2-ethylhexyl)sulfosuccinat, Methylbenzolsulfonat und Ethylbenzolsulfonat.

10. Verfahren gemäß einem der Ansprüche 1 bis 7, **dadurch gekennzeichnet, dass** das grenzflächenaktive Mittel ein kationisches grenzflächenaktives Mittel ist, ausgewählt aus quaternären Ammoniumverbindungen der folgenden Formel (IV) :
(R₇)₄-N⁺, An⁻ (IV)
in der:
- die Gruppen R₇, die gleich oder unterschiedlich sind, eine C₁-C₂₀-Alkylkette darstellen,
- An⁻ ein anionisches Gegenion ist.

11. Verfahren gemäß Anspruch 10, **dadurch gekennzeichnet, dass** die quaternären Ammoniumverbindungen der Formel (IV) ausgewählt sind aus Tetradecyltrimethylammoniumbromid, Alkylpyridiniumhalogeniden, die eine aliphatische C₁-C₁₈-Kette tragen, und Alkylammoniumhalogeniden.

12. Verfahren gemäß einem der Ansprüche 1 bis 7, **dadurch gekennzeichnet, dass** das grenzflächenaktive Mittel ein zwitterionisches grenzflächenaktives Mittel ist, das ausgewählt ist aus den Verbindungen der folgenden Formel (V):
Z⁻-R₈-Z⁺ (V)
in der:
- R₈ eine C₁-C₂₀-Alkylkette darstellt,
- Z⁻ eine negativ geladene Funktion, die von R₈ getragen wird, darstellt,
- Z⁺ eine positiv geladene Funktion, die durch R₈ getragen wird, darstellt.

13. Verfahren gemäß einem der Ansprüche 1 bis 7, **dadurch gekennzeichnet, dass** das grenzflächenaktive Mittel nichtionisch ist und aus den polyethoxylierten grenzflächenaktiven Mitteln und den Polyolen ausgewählt ist.

## Claims

1. Method for forming a copolymeric organic film on an electrically conducting or semi-conducting surface by electrolysis of an electrolytic solution until said copolymeric organic film grafted onto said surface is obtained, said method being **characterised in that**:
a) the electrolytic solution comprises:
i) at least one protic solvent,
ii) at least one aryl diazonium salt, and
iii) at least one vinyl monomer,
iv) at least one surfactant;
b) the electrolysis of the electrolytic solution is carried out at a reduction potential which is at least equal to the reduction potential of said initiator.

2. Method according to claim 1, **characterised in that** the electrically conducting or semi-conducting surface is chosen from stainless steel, steel, iron, copper, nickel, cobalt, niobium, aluminium, silver, titanium, silicon with or without its oxide, titanium nitride, tungsten, tungsten nitride, tantalum, tantalum nitride, and noble metallic surfaces composed of at least one metal chosen from gold, platinum, iridium and platinum-iridium.

3. Method according to claim 1 or 2, **characterised in that** the protic solvent is chosen from the group composed of water, acetic acid, hydroxylated solvents, low molecular weight liquid glycols, and mixtures thereof.

4. Method according to any one of the preceding claims, **characterised in that** the protic solvent is used in a mixture with an aprotic solvent, it being understood that the resulting mixture has the characteristics of a protic solvent.

5. Method according to any one of the preceding claims, **characterised in that** the aryl diazonium salts are chosen from the compounds of the following formula (I):
R-N₂⁺, A⁻ (I)
wherein:
- A represents a monovalent anion and
- R represents an aryl group.

6. Method according to any one of claims 1 to 4, **characterised in that** the radical polymerisation initiator is chosen from phenyldiazonium tetrafluoroborate, 4-nitro-phenyldiazonium tetrafluoroborate, 4-bromophenyldiazonium tetrafluoroborate, 2-methyl-4-chlorophenyldiazonium chloride, 4-benzoylbenzenediazonium tetrafluoroborate, 4-cyanophenyldiazonium tetrafluoroborate, 4-carboxyphenyldiazonium tetrafluoroborate, 4-acetamidophenyldiazonium tetrafluoroborate, 4-phenylacetic acid diazonium tetrafluoroborate, 2-methyl-4-[(2-methylphenyl)diazenyl]benzenediazonium sulfate, 9,10-dioxo-9,10-dihydro-1-anthracenediazonium chloride, 4-nitronaphthalene-diazonium tetrafluoroborate and naphthalenediazonium tetrafluoroborate.

7. Method according to any one of the preceding claims, **characterised in that** the vinyl monomer is chosen from the monomers of the following formula (II): 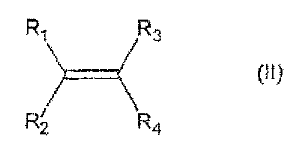 wherein the groups R₁ to R₄, which may be identical or different, represent a non-metallic monovalent atom chosen from the halogen and hydrogen atoms, or a saturated or unsaturated chemical group chosen from the groups alkyl, aryl, the group -COOR₅ wherein R₅ represents a hydrogen atom or a C₁-C₆-alkyl group, nitrile, carbonyl, amine or amide.

8. Method according to any one of the preceding claims, **characterised in that** the surfactant is an anionic surfactant of the following formula (III):
R₆-A⁻, Cat⁺ (III)
wherein:
- R₆ represents an aryl or C₁-C₂₀-alkyl group,
- A⁻ is an anion chosen from the sulfonates, sulfates, phosphates, carboxylates and sulfosuccinates,
- Cat⁺ is a cationic counterion chosen from the ammonium ion, quaternary ammoniums and alkaline cations.

9. Method according to claim 8, **characterised in that** the anionic surfactants of formula (III) are chosen from tetraethylammonium paratoluenesulfonate, sodium dodecylsulfate, sodium palmitate, sodium stearate, sodium myristate, sodium di(2-ethylhexyl)sulfosuccinate, methyl benzenesulfonate and ethyl benzenesulfonate.

10. Method according to any one of claims 1 to 7, **characterised in that** the surfactant is a cationic surfactant chosen from the quaternary ammoniums of the following formula (IV):
(R₇)₄-N⁺, An⁻ (IV)
wherein:
- the groups R₇, which may be identical or different, represent a C₁-C₂₀-alkyl chain,
- An⁻ is an anionic counterion.

11. Method according to claim 10, **characterised in that** the quaternary ammoniums of formula (IV) are chosen from tetradecyltrimethylammonium bromide, alkylpyridinium halides carrying an aliphatic C₁-C₁₈ chain, and alkylammonium halides.

12. Method according to any one of claims 1 to 7, **characterised in that** the surfactant is a zwitterionic surfactant chosen from the compounds of the following formula (V):
Z⁻-R₈-Z⁺ (V)
wherein:
- R₈ represents a C₁-C₂₀-alkyl chain,
- Z⁻ represents a negatively charged functional group carried by R₈,
- Z⁺ represents a positively charged functional group carried by R₈.

13. Method according to any one of claims 1 to 7, **characterised in that** the surfactant is non-ionic and is chosen from the polyethoxylated surfactants and the polyols.
